# EUROPÄISCHE PATENTSCHRIFT

(11) **EP 4 147 421 B1**
(45) Veröffentlichungstag und Bekanntmachung des Hinweises auf die Patenterteilung: **25.06.2025**
(21) Anmeldenummer: 21720243.1
(22) Anmeldetag: 19.04.2021
(51) Int. Cl.: H04B 5/24, H04B 5/79, H04B 5/26, H04L 12/40, H04L 12/10

(54) **SCHNITTSTELLE FÜR ENERGIE- UND DATENÜBERTRAGUNG**
INTERFACE FOR ENERGY AND DATA TRANSMISSION
INTERFACE POUR LA TRANSMISSION D'ÉNERGIE ET DE DONNÉES

(30) Priorität: 08.05.2020 DE 102020112540
(43) Veröffentlichungstag der Anmeldung: 15.03.2023
(73) Patentinhaber: Endress+Hauser Wetzer GmbH+Co. KG, 87484 Nesselwang (DE)
(72) Erfinder: WARNKING, Michael, 87497 Wertach (DE)
(74) Vertreter: Endress + Hauser Group Services (Deutschland) AG+Co. KG
(86) Internationale Anmeldenummer: PCT/EP2021/060097
(87) Internationale Veröffentlichungsnummer: WO 2021/223995

(56) Entgegenhaltungen:
- EP-A2- 0 858 174
- DE-A1- 102009 014 452

## Beschreibung

Die Erfindung betrifft eine Schnittstelle zur Daten- und Energie-Übertragung an Feldgeräte.

In der Automatisierungstechnik, insbesondere in der Prozessautomatisierungstechnik, werden vielfach Feldgeräte eingesetzt, die zur Erfassung und/oder zur Beeinflussung verschiedener Messgrößen dienen. Bei der zu bestimmenden Messgröße kann es sich beispielsweise um eine Temperatur, einen Füllstand, einen Durchfluss, einen Druck, den pH-Wert, das Redoxpotential, eine Leitfähigkeit oder der Dielektrizitätswert eines Mediums handeln. Zur Erfassung der entsprechenden Messwerte umfassen die Feldgeräte jeweils geeignete Sensoren bzw. basieren auf geeigneten Messprinzipien. Eine Vielzahl dieser Feldgeräte wird von der Firmengruppe Endress + Hauser hergestellt und vertrieben.

Die Kommunikation mit dem Feldgerät, beispielsweise ausgehend von einer übergeordneten Einheit wie einer Prozessleitstelle, erfolgt über eine in der Prozessautomation geeignete Schnittstelle. Softwareseitig wird die Schnittstelle nach den entsprechenden Anforderungen ausgerichtet. Als robuster, analoger Standard hat sich beispielsweise 4-20 mA gemäß der Norm DIN IEC 60381-1 etabliert. In diesem Fall wird der über die Hin- und Rückleitung fließende Gleichstrom zum bzw. vom Feldgerät so eingestellt, dass er den aktuellen Wert der Prozessgröße repräsentiert. Handelt es sich um ein Zweidraht-Feldgerät, so erfolgen die Energie-Versorgung des Feldgerätes und die Übertragung des Einheitssignals über die gleiche Zweidrahtleitung. Bei einer Vierdraht-Schnittstelle erfolgt die Energie-Versorgung separat über die zwei zusätzlichen Leitungen. Ein Feldgerät mit einer 4-20 mA Schnittstelle wird beispielsweise in der Veröffentlichungsschrift DE 10 2013 114 377A1 gezeigt.

In modernen Prozessanlagen erfolgt die Übertragung von Messwerten bzw. die Kommunikation mit Feldgeräten zunehmend mittels digitaler Protokolle, wie beispielsweise "IO-Link" gemäß der IEC-Norm 61131-9, "PROFIBUS", "HART", "Wireless HART", "Modbus" oder auch "Ethernet". Vorteilhaft hieran ist der im Vergleich zu strombasierten Übertragungsprotokollen geringere Leistungsverbrauch. Hierdurch wird der Einsatz in explosionsgefährdeten Bereichen vereinfacht, da der Energieverbrauch am Feldgerät reduziert werden kann.

Um in explosionsgefährdeten Bereichen entsprechende Explosionsschutz-Vorgaben einzuhalten, muss die Schnittstelle zudem so ausgelegt werden, dass das Feldgerät galvanisch von der übergeordneten Einheit getrennt ist. Außerdem darf die zum Feldgerät übertragene Leistung einen kritischen Maximalwert nicht überschreiten. Insbesondere durch die galvanische Trennung wird verhindert, dass Ausgleichsströme zwischen den Anlagenteilen auftreten, oder dass Spannungen in den jeweils anderen Bereich verschleppt werden, so dass hierdurch eine Entzündung im explosionsgefährdeten Bereich riskiert wird.

Die galvanische Trennung innerhalb der Schnittstelle bezieht sich in Bezug zum Explosionsschutz sowohl auf die Energieversorgung der Schaltungsteile als auch auf den Datenaustausch zwischen der übergeordneten Einheit und dem Feldgerät. In diesem Zusammenhang werden die Energie und die entsprechenden Datenpakete beispielsweise über unabhängige Kanäle übertragen. So kann die Energieversorgung über einen Transformator erfolgen, wobei der Datenaustausch der Datenpakete über einen Optokoppler erfolgt. Dies ist jedoch insbesondere im explosionsgefährdeten Bereich mit höherem Platzbedarf, Kosten, Testaufwand und Mehraufwand bei der Zulassung verbunden. Zudem ist es häufig erforderlich, mehrere Feldgeräte über eine gemeinsame übergeordnete Einheit zu betreiben, wodurch der Platzbedarf weiter erhöht wird.

Daher ist es aus dem Stand der Technik bekannt, sowohl Datenpakete als auch Energie zum Betrieb des Feldgerätes über einen gemeinsamen Transformator, bestehend aus einer Primärspule und einer induktiv gekoppelten Sekundärspule, zu übertragen. Bekannt sind diesbezüglich Modulationsverfahren der Schaltfrequenz und Impulsübertragung der Signale, die dem Datenpaket gemäß des implementierten Übertragungsstandard entsprechen. Beschrieben ist dies beispielsweise in der Veröffentlichungsschrift DE 10 2007 060 555 A1. Die dort beschriebene Lösung hat jedoch den Nachteil, dass die Daten-Übertragungsrate deutlich kleiner als die Schaltfrequenz sein muss, da die Schaltfrequenz als Trägerfrequenz für die Modulation verwendet wird. Dies beschränkt die Daten-Übertragungsrate.

In der Veröffentlichungsschrift DE 102009014452 A1 wird ein galvanisch getrenntes Energie- und Datenübertragungsmodul beschrieben, bei dem während der Übertragung Impulslängen verändert werden, um Daten von der Primär- auf die Sekundärseite zu übertragen. In entgegengesetzter Richtung wird in Kurzschluss erzeugt, welcher auf der Primärseite dekodiert wird.

Die Veröffentlichungsschrift EP 858174 A2 offenbart ein Übertragungsmodul, bei dem leistungsgebundene Energie- und Datenübertragung ohne galvanische Trennung erfolgt. Dabei wird eine Halbwelle für die Amplitudenmodulation zur Datenübertragung verwendet.

Der Erfindung liegt die Aufgabe zugrunde, eine galvanisch trennende Schnittstelle bereitzustellen, die eine hohe Daten-Übertragungsrate zu Feldgeräten im explosionsgeschützten Bereich ermöglicht.

Die Erfindung löst diese Aufgabe durch eine galvanisch trennende Schnittstelle zur Übertragung von elektrischer Energie und Datenpaketen, die folgende Komponenten umfasst:
- Eine Spulenanordnung mit einer Primärspule und zumindest einer Sekundärspule, wobei die Spulenanordnung derart ausgelegt ist, dass die Primärspule und die zumindest erste Sekundärspule beispielsweise mittels eines entsprechenden ferromagnetischen Spulenkerns induktiv miteinander gekoppelt sind, aber außerdem galvanisch voneinander entkoppelt sind,
- eine Schalt-Einheit die gemäß des Push-Pull-Wandlerprinzips derart ausgelegt ist,
   ∘ dass die Primärspule an eine Versorgungsspannung schließbar und hiervon oder Masse-seitig trennbar ist, so dass die Primärspule Masse-seitig trennbar ist und über die Primärspule keine elektrische Verbindung mehr zwischen der Versorgungsspannung und Masse besteht, und
   ∘ dass die Primärspule hinsichtlich der Versorgungsspannung umpolbar ist,
- eine Steuerungs-Einheit, die ausgelegt ist, die Schalt-Einheit derart zu steuern,
   ∘ dass die Primärspule in einer definierten Taktrate, welche in Abhängigkeit eines definierten, seriellen Übertragungsstandards gewählt ist, umgepolt wird, so dass in der Sekundärspule ein entsprechendes Wechselspannungssignal induziert wird,
   ∘ dass die Primärspule vor bzw. nach jeder Umpolung pro Takt für jeweils eine definierte Totzeit von der Versorgungsspannung bzw. von der Masse getrennt ist, und
   ∘ dass in Totzeiten derjenigen Takte, welche einem Datenpaket des Übertragungsstandards entsprechen, in der Spulenanordnung primärseitig jeweils ein elektrischer Puls generiert wird,
- einen Gleichrichter, der ausgelegt ist, das in der ersten Sekundärspule induzierte Wechselspannungssignal gleichzurichten und als Energie bereitzustellen, so dass die entsprechend induzierte Energie dem Feldgerät zur Verfügung steht, und
- eine Auswertungs-Einheit, die ausgelegt ist, die primärseitig generierten Pulse gemäß des Übertragungsstandards über die erste Sekundärspule als das zu übertragende Datenpaket zu erfassen.

Die erfindungsgemäße Steuerung der Schalt-Einheit erlaubt neben der Energie-Versorgung des Feldgeräts durch die Nutzung der Totzeiten zur Bitübertragung eine hohe Bitübertragungsrate, die mindestens der Taktrate entspricht. Der gegebenenfalls pro Bit korrespondierende elektrische Puls (der Puls entspricht im Rahmen der Erfindung beispielsweise logisch = "1", während ein während der Totzeit nicht generierter Puls als logische "0" interpretiert werden kann, oder umgekehrt) kann dabei in der Primärspule beispielsweise generiert werden, indem der jeweilige Schalter kurzzeitig wieder geschlossen wird. Prinzipiell ist jedoch auch jegliche andere Form der Pulserzeugung denkbar. Beispielsweise kann hierfür alternativ auch eine zweite Primärspule eingesetzt werden, oder der Puls kann kapazitiv in die erste Primärspule eingekoppelt werden.

Unter dem Begriff "Einheit" wird im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung wie einem FPGA oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten der Schnittstelle bzw. des Mess-Systems im Sinne der Erfindung potenziell auch auf einen gemeinsamen physikalischen Speicher zurückgreifen bzw. mittels derselben physikalischen Digitalschaltung betrieben werden.

Das Umpolen der Primärspule kann im Rahmen der Erfindung auf verschiedene Arten realisiert werden. In einer ersten Variante kann dies durch invers getaktetes Umpolen der zwei Spulen-Endabgriffe von der Versorgungsspannung auf Masse, und im Anschluss umgekehrt, erfolgen. Zur Umpolung bzw. zur Trennung kann die Schalt-Einheit in diesem Fall beispielsweise zwei entsprechend angeordnete Schalter umfassen, die von der Steuerungs-Einheit jeweils entweder auf die Versorgungsspannung, auf Masse oder offen geschaltet werden können. Dabei steuert die Steuerungs-Einheit die zwei Schalter derart invers, dass die Primärspule zwischen dem inversen Umpolen der zwei Endabgriffe von Masse auf Versorgungsspannung bzw. umgekehrt für jeweils die definierte Totzeit zumindest von der Versorgungsspannung oder von der Masse getrennt ist.

Alternativ hierzu kann die Primärspule einen Mittelabgriff umfassen. In diesem Fall besteht eine schaltungstechnisch einfache Variante zur Umsetzung des Push-Pull-Wandlerprinzips wiederum darin, dass der Mittelabgriff fest mit der Versorgungsspannung verbunden ist. Die Steuerungs-Einheit steuert den Schalter bei dieser Alternative derart,
∘ dass der erste Schalter entsprechend der Taktrate den ersten Endabgriff auf Masse schaltet und davon trennt, und
∘ dass der zweite Schalter entsprechend der Taktrate den zweiten Endabgriff invers zum ersten Schalter auf Masse schaltet und davon trennt, also öffnet.

Auch bei dieser Alternative steuert die Steuerungs-Einheit die zwei Schalter derart invers, dass die Primärspule zwischen dem Öffnen des jeweiligen Schalters und dem Schließen des jeweils anderen Schalters für die definierte Totzeit von der Masse getrennt ist.

Damit über die Schnittstelle nicht lediglich eine monodirektionale Kommunikation von der übergeordneten Einheit zum Feldgerät möglich ist, sondern auch umgekehrt, kann die Schnittstelle um folgende Komponente erweitert werden:
- Einen über einen dritten Schalter mit der Sekundärspule verbindbare Energiespeicher wie einen Kondensator oder einen Akkumulator, der beispielsweise wiederum durch den Gleichrichter gespeist werden kann.

Außerdem ist die Auswertungs-Einheit bei dieser Erweiterung zu konzipieren, um den dritten Schalter derart zu steuern, dass abhängig von einem - zur übergeordneten Einheit - zu übertragenden Datenpaket in Totzeiten definierter Takte (in Bezug zur primärseitigen Taktung), welche gemäß des Übertragungsstandards diesem Datenpaket entsprechen, elektrische Pulse in der Sekundärspule generiert werden. Die Steuerungs-Einheit ist zum primärseitigen Empfang des vom Feldgerät ausgehenden Datenpaketes bei dieser bidirektionalen Erweiterung so auszulegen, dass sie die in der Sekundärspule generierten Pulse an der Primärspule gemäß des Übertragungsstandards als das zu übertragende Datenpaket erfassen kann.

Das Übertragungsstandard, mittels dem die Datenpakete zum Feldgerät bzw. zur übergeordneten Einheit übertragen werden, ist im Rahmen der Erfindung nicht fest vorgegeben. Insbesondere bietet es sich jedoch an, wenn hierzu in der Steuerungs-Einheit und/oder in der Auswertungs-Einheit "UART" oder "USART" als Übertragungsstandard zur Übertragung des jeweiligen Datenpaketes implementiert ist. In diesem Zusammenhang sei erwähnt, dass bei bidirektionaler Kommunikation das Übertragungsstandard hin zum Feldgerät nicht zwangsweise dem Übertragungsstandard in Richtung der übergeordneten Einheit entsprechen muss.

Um die Daten-Übertragungsrate weiter zu erhöhen, kann die Steuerungs-Einheit und/oder die Auswertungs-Einheit so ausgelegt werden, dass die Pulse mit einer veränderbaren Energie, wie beispielsweise einer veränderbaren Amplitude oder einer veränderbaren Pulsdauer generiert bzw. übertragen werden. In diesem Fall können beispielsweise zwei verschiedene Energiezustände des Pulses ein weiteres Bit repräsentieren.

Mittels der erfindungsgemäßen Schnittstelle ist es nicht nur möglich, ein einziges Feldgerät anzusteuern bzw. mit Energie zu versorgen. Im Falle zweier oder mehrerer Feldgeräte kann die Spulenanordnung beispielsweise eine zweite bzw. weitere Sekundärspulen umfassen. Dabei sind die weiteren Sekundärspulen korrespondierend zur ersten Sekundärspule wiederum galvanisch von der Primärspule zu entkoppeln. In diesem Fall sind die an die Feldgeräte zu sendenden Datenpakete - bzw. die vom jeweiligen Feldgerät empfangenen Datenpakete - mit einer entsprechenden Adressierung zu versehen, wodurch eine eindeutige Zuordnung ermöglicht wird. Außerdem sind die weiteren Sekundärspulen korrespondierend zur ersten Sekundärspule mit jeweils einem entsprechenden Gleichrichter und einer entsprechenden Auswertungs-Einheit auszustatten.

Korrespondierend zur erfindungsgemäßen Schnittstelle nach einer der zuvor beschriebenen Ausführungsvarianten wird die Aufgabe, die der Erfindung zugrunde liegt, zudem durch ein entsprechendes Verfahren zu dessen Betrieb gelöst. Dabei umfasst das Verfahren folgende Verfahrensschritte:
- Umpolung der Primärspule in einer definierten Taktrate, welche in Abhängigkeit eines definierten, seriellen Übertragungsstandards gewählt ist, so dass in der Sekundärspule ein entsprechendes Wechselspannungssignal induziert wird. Dabei wird die Primärspule vor bzw. nach jeder Umpolung pro Takt für jeweils eine definierte Totzeit von der Versorgungsspannung bzw. von der Masse getrennt, so dass über die Primärspule keine elektrische Verbindung zwischen der Versorgungsspannung und Masse besteht,
- Generierung eines elektrischen Pulses in der Primärspule innerhalb der Totzeiten jeweils derjenigen Takte, die gemäß des Übertragungsstandards dem Datenpaket entsprechen,
- Gleichrichtung des in der Sekundärspule induzierten Wechselspannungssignals, so dass sekundärseitig Energie bereitgestellt wird, und
- Erfassung der in der Primärspule generierten Pulse über die Sekundärspule gemäß des Übertragungsstandards als das zu übertragende Datenpaket.

Auf Basis der erfindungsgemäßen Schnittstelle kann ein entsprechendes Mess-System realisiert werden, beispielsweise zum Einsatz in einer explosionsgefährdeten Prozessanlage. Zur Realisierung eines solchen Mess-Systems erfordert es neben der Schnittstelle gemäß einer der vorhergehenden Ausführungsvarianten außerdem zumindest:
- Eine primärseitig an die Schnittstelle angebundene, übergeordnete Einheit,
   o die ausgelegt ist, ein Datenpaket zu generieren und
      ein Feldgerät, wie beispielsweise ein Temperatursensor oder ein Füllstandsmessgerät, das sekundärseitig an die Schnittstelle angebunden ist, mit Energie zu versorgen.

Hierdurch ist das Datenpaket gemäß des Übertragungsstandards von der übergeordneten Einheit über die Schnittstelle an das Feldgerät übertragbar. Gleichzeitig trennt die Schnittstelle das Feldgerät galvanisch von der übergeordneten Einheit, wobei die übergeordnete Einheit das Feldgerät über die Schnittstelle trotz der galvanischen Trennung mit Energie versorgen kann.

Anhand der nachfolgenden Figuren wird die Erfindung näher erläutert. Es zeigt:
Fig. 1: Eine schematische Anordnung der erfindungsgemäßen Schnittstelle innerhalb einer Prozessanlage,
Fig. 2: ein Blockschaltbild eines Ausführungsbeispiels der Schnittstelle, und
Fig. 3: eine erfindungsgemäß getaktete Datenübertragung innerhalb der Schnittstelle.

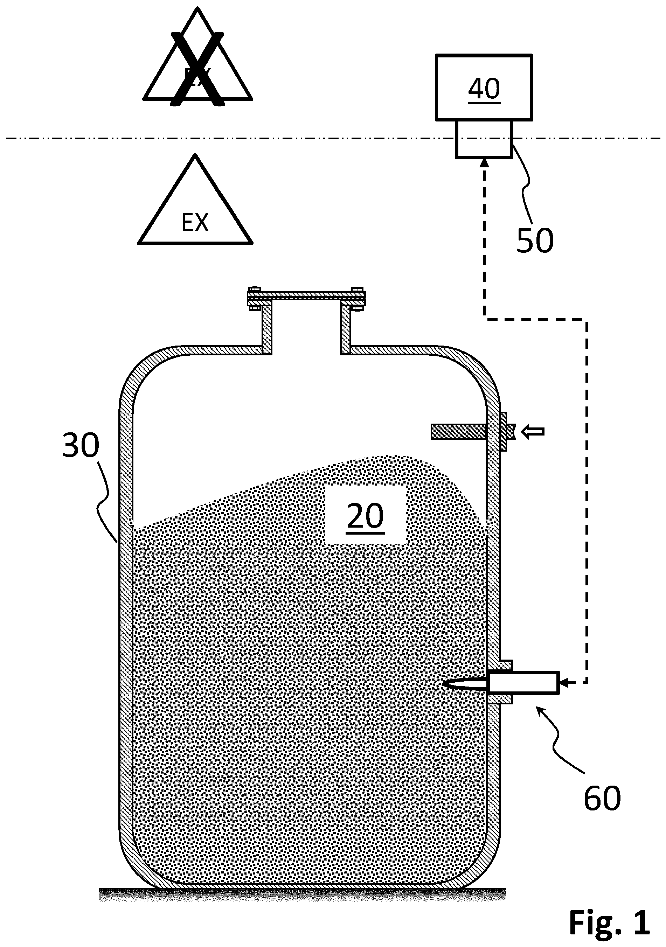

Zum allgemeinen Verständnis der Erfindung ist in Fig. 1 eine Prozessanlage mit einem erfindungsgemäßen Mess-System gezeigt. Das Mess-System basiert auf einem Feldgerät 60, das zur Bestimmung einer Prozessgröße, wie einer Temperatur oder einem Füllstand eines Füllgutes 20 in einem Behälter 30 der Prozessanlage dient. Hierzu ist das Feldgerät 60 an einem seitlichen Anschluss des Behälters 30 wie einem Flanschanschluss befestigt, so dass das Feldgerät 60 in entsprechendem Kontakt dem Füllgut 20 steht. Zur Energieversorgung des Feldgerätes 60 und zur Übertragung von Datenpaketen, wie beispielsweise Steuerungseingaben oder Messwerten, ist das Feldgerät 60 über eine erfindungsgemäße Schnittstelle 50 mit einer übergeordneten Einheit 40 wie einer Prozessleitstelle verbunden. Als softwareseitige Schnittstelle kann hierzu beispielsweise "4-20 mA", "IO-Link", "PROFIBUS", "HART", "Modbus" oder auch "Ethernet" implementiert sein. Auf Basis der erhaltenen Messwerte kann die übergeordnete Einheit 40 neben dem Feldgerät 60 beispielsweise auch entsprechende Pumpen oder Ventile am Behälter 30 regeln. Hieraus wird deutlich, dass eine hohe Daten-Übertragungsrate zwischen der übergeordneten Einheit 40 und dem Feldgerät 60 essenziell für eine verzögerungsarme und somit sichere Regelung innerhalb der Prozessanlage bzw. innerhalb des Mess-Systems ist.

Bei dem Behälter 30 kann es sich beispielsweise um einen Speichertank für Flüssigkeiten wie Lacke, Zement oder Treibstoffe, wie Flüssiggase oder Mineralöle handeln. Es kann sich beispielsweise auch um einen Reaktor handeln, in welchem die entsprechenden Edukte verarbeitet werden. Aufgrund der damit einhergehenden Explosionsgefahr ist der Bereich innerhalb der Prozessanlage, in dem sich der Behälter 30 befindet, als explosionsgefährdeter Bereich definiert. Aufgrund dessen muss das Feldgerät 60 Explosionsschutz-konform ausgelegt sein, in Europa beispielsweise gemäß der Normenreihe EN 60079. Daher darf das Feldgerät 60 einerseits lediglich mit einer begrenzten Leistung versorgt werden. Andererseits muss das Feldgerät 60 galvanisch von der übergeordneten Einheit 40, die sich außerhalb des explosionsgefährdeten Bereichs befindet, getrennt sein.

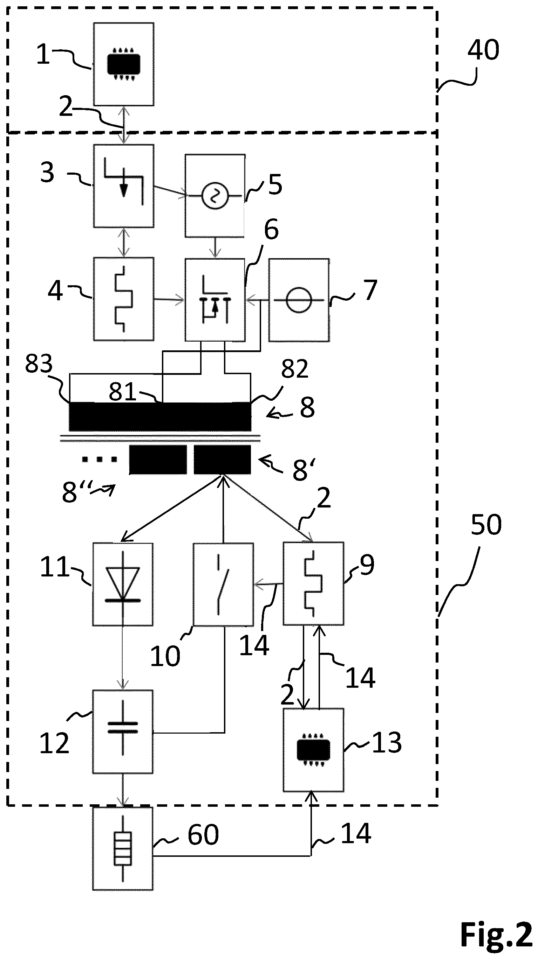

Der erfindungsgemäße Aufbau der Schnittstelle 50, durch die das Feldgerät 60 galvanisch von der übergeordneten Einheit 40 getrennt wird, ist als Blockschaltbild in Fig. 2 näher erläutert: Die Energieversorgung des Feldgerätes 60 geht hierbei von einer Gleichspannungsversorgung 7 auf der Primärseite der Schnittstelle 50 aus, wobei die Schnittstelle 50 primärseitig mit der übergeordneten Einheit 40 verbunden ist. Zur induktiven Übertragung der elektrischen Energie auf die Sekundärseite der Schnittstelle 50 - an welche das Feldgerät 60 angeschlossen ist - ist die Versorgungsspannung 7 primärseitig an einen Mittelabgriff 81 einer Primärspule 8 eines Transformators angeschlossen. Dabei ist der Transformator so ausgelegt, dass die Primärspule 8 und die erste Sekundärspule 8' induktiv - beispielsweise über einen entsprechenden Spulenkern - miteinander gekoppelt sind. Dennoch sind beide Spulen 8, 8', wie bei Transformatoren allgemein erforderlich, galvanisch voneinander entkoppelt, so dass hierdurch auch das Feldgerät 60 von der übergeordneten Einheit 40 galvanisch entkoppelt wird.

Bei der in Fig. 2 gezeigten Ausführungsvariante der erfindungsgemäßen Schnittstelle 50 weist die Primärspule 8 einen symmetrischen Mittelabgriff 81 auf, der mit der Versorgungsspannung 7 verbunden ist. Die zwei Endabgriffe 82, 83, der Primärspule 8 sind über jeweils einen ersten Schalter einer primärseitigen Schalt-Einheit 6 - zumindest mittelbar - mit Masse verbindbar. Dabei wird die Schalt-Einheit 6 wiederum von einer primärseitigen Steuerungs-Einheit 3, 4, 5 gesteuert. Die Steuerungs-Einheit 3, 4, 5 steuert den ersten Schalter am ersten Endabgriff 82 so, dass dieser entsprechend einer definierten Taktrate auf Masse geschaltet und wieder davon getrennt wird. Die Taktrate wird der Schalt-Einheit 6 wiederum durch einen Oszillator 5 der Steuerungs-Einheit 3, 4, 5, bzw. dessen Schwingfrequenz, vorgegeben.

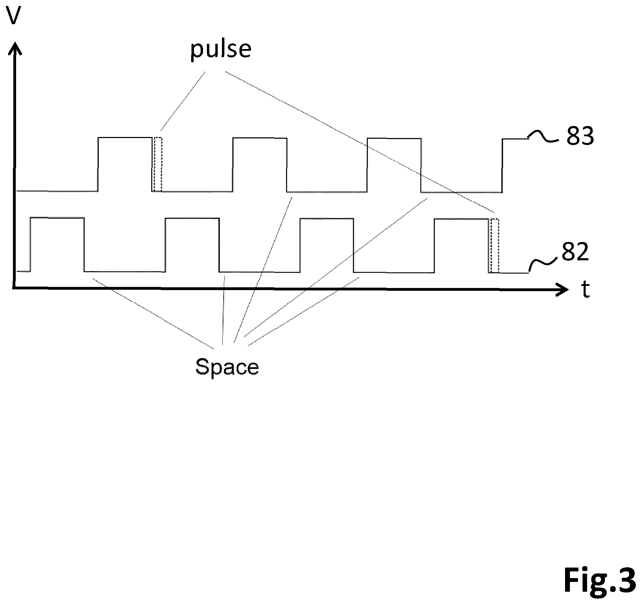

Auch der zweite Schalter der Schalt-Einheit 6 am zweiten Endabgriff 83 der Primärspule 8 wird von der Steuerungs-Einheit 3, 4, 5 so gesteuert, dass der zweite Endabgriff 83 entsprechend der Taktrate auf Masse geschaltet und davon getrennt wird, jedoch zeitlich genau invers zum ersten Schalter am ersten Endabgriff 82. Dargestellt ist die entsprechende invers getaktete Steuerung der zwei Schalter schematisch in Fig. 3. Dabei stellt der dortige Graph den zeitlich inversen Schaltspannungsverlauf an den Eingängen der zwei Schalter für die Endabgriffe 82, 83 der Primärspule 8 dar. Diesbezüglich können die Schalter der Schalt-Einheit 6 dementsprechend beispielsweise als Transistoren ausgelegt sein. Wie aus Fig. 3 außerdem ersichtlich wird, werden die zwei Schalter zeitlich derart invers von der Steuerungs-Einheit 3, 4, 5 gesteuert, dass das Schließen des einen Schalters nicht zeitgleich zum Öffnen des jeweils anderen Schalters erfolgt. Vielmehr erfolgt das Schließen des jeweiligen Schalters in Bezug zum Öffnen des jeweils anderen Schalters mit einer derartigen Verzögerung, dass die Primärspule 8 zwischen dem Öffnen des einen Schalters und dem Schließen des jeweils anderen Schalters für jeweils die definierte Totzeit ("Space") von der Masse getrennt ist.

Die getaktete Umpolung der Primärspule 8 durch wechselseitiges Erden der Endabgriffe 82, 83 induziert in der Sekundärspule 8' ein entsprechendes Wechselspannungssignal. Durch einen sekundärseitigen Gleichrichter 11 wird dieses Wechselspannungssignal gleichgerichtet und dem Feldgerät 60 als Energie bereitgestellt bzw. einem Energiespeicher 12 wie einem Pufferkondensator zur Zwischenspeicherung zugeführt. Wie in Fig. 2 angedeutet ist, dient die Versorgungsspannung 7 neben der Energieübertragung an das Feldgerät 60 auch zur Spannungsversorgung der weiteren elektronischen Komponenten 3, 4, 5, 6 auf der Primärseite der Schnittstelle 50.

Die Übertragung von Datenpaketen 2 von der Primär- zur Sekundärseite, also von der übergeordneten Einheit 40 zum Feldgerät 60, wird durch einen Hauptprozessor 1 der übergeordneten Einheit 40 initiiert, welcher das Datenpaket 2 auf Basis eines definierten, seriellen Übertragungsstandards generiert und der Schnittstelle 50 zur Verfügung stellt. Dabei ist die in Fig. 2 gezeigte Ausführungsvariante der Schnittstelle 50 auf "UART"-Basis realisiert: Um Bitfehler durch Abweichungen zwischen der Phase bzw. Taktrate der UART und der Frequenz/Phase des Oszillator 5 zu vermeiden, wird der Oszillator 5 mit jeder fallenden Flanke (also mit mindestens dem Startbit) der UART über einen Flankendetektor 3 synchronisiert. Im Fall einer taktgesteuerten Schnittstelle, wie z.B. auf Basis von "USART" oder "SPI", wird der Takt aus dem Oszillator 5 heraus erzeugt, so dass der Takt ohne zusätzliche Synchronisation synchron zum Oszillator 5 läuft. Da die Frequenz des Oszillators 5 die Übertragungs-Taktrate vorgibt, ist der Oszillator bzw. dessen Frequenz in Abhängigkeit des gewählten Übertragungsstandards zu implementieren. Im Falle von "UART" kann als Oszillatorfrequenz bzw. als Taktrate daher beispielsweise n*1200 Hz bzw. Bit/s gewählt werden. Hieraus wird wiederum der Vorteil der erfindungsgemäßen Schnittstelle 40 ersichtlich, nämlich dass das Datenpaket 2 mit einer hohen Bitübertragungsrate übertragen werden kann, die der Taktrate entspricht.

Primärseitig wird das vom Hauptprozessor 1 eingehende Datenpaket 2 mit einem Signalaufbereiter 4, bestehend aus hierzu geeigneten Logik-Gattern und/oder Analogschaltungen, so aufbereitet, dass in der entsprechenden Totzeit ein insbesondere impulsförmiges Signal an einem jeweiligen Eingang der Schalt-Einheit 6 erzeugt wird, jedoch nur, sofern gemäß des Übertragungsstandards ein Puls, also eine logische "1", an die erste Sekundärspule 8' zu senden ist. Verdeutlicht wird dies wiederum in dem Graphen von Fig. 3: Der dortige Schaltspannungsverlauf am jeweiligen Eingang der zwei Schalter der Schalt-Einheit 6 für die Endabgriffe 82, 83 weist in den entsprechenden Totzeiten einen korrespondierenden Puls - also logisch "1"- auf. Sofern in einer entsprechenden Totzeit kein Puls erzeugt bzw. detektiert wird (in Fig. 3 als "Space" symbolisiert), wird dies vom Microcontroller als logische "0" erfasst.

Der etwaige Puls wird innerhalb einer sekundärseitigen Auswertungs-Einheit von einer zweiten Signalaufbereitungs-Einheit 9 erkannt und einem sekundärseitigen Microcontroller 13 übermittelt, der die Pulsfolge gemäß des gewählten Übertragungsstandards als das zu übertragende Datenpaket 2 erfasst. Synchronisiert wird die Sekundärseite über die sekundärseitige, zweite Signalaufbereitungs-Einheit 9, welche durch die Taktung des Wechselspannungssignals synchron zum primärseitigen Oszillator 5 läuft. Somit entspricht die Schnittstelle zwischen der Signalaufbereitungs-Einheit 9 und dem Microcontroller 13 bei dem in Fig. 2 dargestellten Ausführungsbeispiel einer USART.

Zur Datenübertragung von der Sekundär- zur Primärseite, also beispielsweise zur Übertragung von HART-Signalen oder Messwerten des Feldgerätes 60 an die übergeordnete Einheit 40, umfasst die Schnittstelle 50 sekundärseitig einen dritten Schalter 10. Dieser kann den Energiespeicher 12 mit der ersten Sekundärspule 8' verbinden bzw. davon trennen. Durch kurzzeitiges Schließen und Öffnen des dritten Schalters 10 können somit in der ersten Sekundärspule 8' wiederum entsprechende Pulse generiert werden. Angesteuert wird der dritte Schalter 10 von der zweiten Signalaufbereitungs-Einheit 9 der sekundärseitigen Auswertungs-Einheit.

Zur Übertragung eines etwaigen Datenpaketes 14 vom Microcontroller 13 auf die Primärseite kann der dritte Schalter 10 analog zur primärseitigen Schalt-Einheit 6 von der Signalaufbereitungs-Einheit 9 derart geschlossen und geöffnet werden, dass in der ersten Sekundärspule 8' innerhalb definierter Totzeiten der Takte, die durch die Primärseite definiert sind, entsprechende Pulse erzeugt werden. Dabei entsprechen die jeweiligen Totzeiten gemäß des Übertragungsstandards wiederum dem Datenpaket 14. Die zur Primärseite synchrone Taktung des dritten Schalters 10 wird in diesem Fall gewährleistet, da die zweite Signalaufbereitungs-Einheit 9 über das eingehende Wechselspannungssignal synchron zur Primärseite getaktet ist. Bei entsprechender Auslegung kann die Steuerungs-Einheit 3, 4, 5 auf der Primärseite somit die in der Sekundärspule 8' generierten Pulse an der Primärspule 8 gemäß des Übertragungsstandards wiederum als das zu übertragende Datenpaket 14 erfassen und gegebenenfalls weiter an die übergeordnete Einheit 40 übermitteln.

Bei der in Fig. 2 gezeigten Ausführungsvariante der erfindungsgemäßen, galvanisch trennenden Schnittstelle 50 ist somit eine schnelle bidirektionale Kommunikation zwischen der übergeordneten Einheit 40 und dem Feldgerät 60 möglich, deren Bitrate dem maximal dem Zweifachen der Taktfrequenz entspricht.

Auf Basis der erfindungsgemäßen Schnittstelle 50 ist es prinzipiell auch möglich, mehrere Feldgeräte anzusteuern. Wie in Fig. 2 angedeutet ist, kann der Transformator hierzu weitere Sekundärspulen 8" umfassen, an welche analog zum ersten Feldgerät 60 weitere Feldgeräte anschließbar sind. In diesem Fall werden die an die Feldgeräte 60 zu sendenden Datenpakete - bzw. die vom jeweiligen Feldgerät 60 empfangenen Datenpakete - von der übergeordneten Einheit 40 bzw. dem jeweiligen Feldgerät mit einer Adressierung versehen, die eine Zuweisung des Datenpaketes 2, 14 zum jeweiligen Feldgerät 60 erlaubt.

## Patentansprüche

1. Galvanisch trennende Schnittstelle zur Übertragung von elektrischer Energie und Datenpaketen (2), umfassend:
- Eine Spulenanordnung mit zumindest einer Primärspule (8) und zumindest einer Sekundärspule (8'), wobei die Spulenanordnung derart ausgelegt ist, dass die Primärspule (8) und die zumindest erste Sekundärspule (8') , induktiv miteinander gekoppelt, und galvanisch voneinander entkoppelt sind,
- eine Schalt-Einheit (6) die derart ausgelegt ist,
∘ dass die Primärspule (8) an eine Versorgungsspannung (7) schließbar und hiervon oder Masse-seitig trennbar ist, so dass über die Primärspule (8) keine elektrische Verbindung zwischen der Versorgungsspannung (7) und Masse besteht, und
∘ dass die Versorgungsspannung (7) an der Primärspule (8) umpolbar ist,
- eine Steuerungs-Einheit (3, 4, 5), die ausgelegt ist, die Schalt-Einheit (6) derart zu steuern,
∘ dass die Primärspule (8) in einer definierten Taktrate, welche in Abhängigkeit eines definierten, seriellen Übertragungsstandards gewählt ist umgepolt wird, so dass in der Sekundärspule (8') ein entsprechendes Wechselspannungssignal induziert wird,
∘ dass die Primärspule (8) vor bzw. nach jeder Umpolung pro Takt für jeweils eine definierte Totzeit von der Versorgungsspannung (7) bzw. von der Masse getrennt ist, und
∘ dass in Totzeiten derjeniger Takte, welche einem Datenpaket (2) des Übertragungsstandards entsprechen, in der Spulenanordnung primärseitig jeweils ein elektrischer Puls generiert wird,
- einen Gleichrichter (11), der ausgelegt ist, das in der ersten Sekundärspule (8') induzierte Wechselspannungssignal gleichzurichten und als Energie bereitzustellen, und
- eine Auswertungs-Einheit (9, 13), die ausgelegt ist, die primärseitig in der Spulenanordnung generierten Pulse gemäß des Übertragungsstandards über die erste Sekundärspule (8') als das zu übertragende Datenpaket (2) zu erfassen.

2. Schnittstelle nach Anspruch 1, wobei die Primärspule (8) einen Mittelabgriff (81) umfasst, und wobei die Schalt-Einheit (6) zur Trennung der Primärspule (8) von der Versorgungsspannung (7) und zu deren definierter Umpolung zwei von der Steuerungs-Einheit (3, 4, 5) geschaltete Schalter umfasst.

3. Schnittstelle nach Anspruch 2, wobei der Mittelabgriff (81) mit der Versorgungsspannung (7) verbunden ist, und wobei die Steuerungs-Einheit (3, 4, 5) die Schalter derart schaltet,
∘ dass der erste Schalter entsprechend der Taktrate den ersten Endabgriff (82) auf Masse schaltet und davon trennt, und
∘ dass der zweite Schalter entsprechend der Taktrate invers zum ersten Schalter den zweiten Endabgriff (83) auf Masse schaltet und davon trennt,
und wobei die Steuerungs-Einheit (3, 4, 5) die zwei Schalter derart invers steuert, dass die Primärspule (8) zwischen dem Öffnen des jeweiligen Schalters und dem Schließen des jeweils anderen Schalters für jeweils die definierte Totzeit von der Masse getrennt ist.

4. Schnittstelle nach einem der Ansprüche 1 bis 3, umfassend:
- Einen über einen dritten Schalter (10) mit der Sekundärspule (8') verbindbaren Energiespeicher (12), wobei der Energiespeicher (12) insbesondere durch den Gleichrichter (11) gespeist wird,
wobei die Auswertungs-Einheit (9, 13) ausgelegt ist, den dritten Schalter (10) derart zu steuern, dass abhängig von einem zu übertragenden Datenpaket (14) in Totzeiten definierter Takte, welche gemäß des Übertragungsstandards dem Datenpaket (14) entsprechen, elektrische Pulse in der Sekundärspule (8') generiert werden, und
wobei die Steuerungs-Einheit (3, 4, 5) ausgelegt ist, die in der Sekundärspule (8') generierten Pulse an der Primärspule (8) gemäß des Übertragungsstandards als das zu übertragende Datenpaket (14) zu erfassen.

5. Schnittstelle nach einem der vorhergehenden Ansprüche, wobei in der Steuerungs-Einheit (3, 4, 5) und/oder in der Auswertungs-Einheit (9, 13) UART oder USART als Übertragungsstandard zur Übertragung des Datenpaketes (2, 14) implementiert ist.

6. Schnittstelle nach einem der vorhergehenden Ansprüche, wobei die Steuerungs-Einheit (3, 4, 5) und/oder die Auswertungs-Einheit (9, 13) ausgelegt sind/ist, die Pulse mit einer veränderbaren Energie, wie beispielsweise einer veränderbaren Amplitude oder einer veränderbaren Pulsdauer zu übertragen.

7. Schnittstelle nach einem der vorhergehenden Ansprüche, wobei die Spulenanordnung eine zweite Sekundärspule (8") umfasst.

8. Mess-System, umfassend:
- Eine übergeordnete Einheit (40), die ausgelegt ist, ein Datenpaket (2) zu generieren und
- ein Feldgerät (60) mit Energie zu versorgen, und
- Eine Schnittstelle (50) nach einem der vorhergehenden Ansprüche, die derart primärseitig an die übergeordnete Einheit (40) und sekundärseitig an das Feldgerät (60) angebunden ist,
∘ so dass das Datenpaket (2) gemäß des Übertragungsstandards an das Feldgerät (60) übertragbar ist,
∘ so dass die übergeordnete Einheit (40) das Feldgerät (60) über die Schnittstelle (50) mit Energie versorgt, und
∘ so dass das Feldgerät (60) galvanisch von der übergeordneten Einheit (40) getrennt ist.

9. Verfahren zur Übertragung von Energie und Datenpaketen (2) über die Schnittstelle (50) nach einem der Ansprüche 1 bis 7, folgende Verfahrensschritte umfassend:
- Umpolung der Primärspule (8) in einer definierten Taktrate, welche in Abhängigkeit eines definierten, seriellen Übertragungsstandards gewählt ist, [S. 9. Z. 5-8] so dass in der Sekundärspule (8') ein entsprechendes Wechselspannungssignal induziert wird, wobei die Primärspule (8) vor bzw. nach jeder Umpolung pro Takt für jeweils eine definierte Totzeit von der Versorgungsspannung (7) oder der Masse getrennt ist, so dass über die Primärspule (8) keine elektrische Verbindung zwischen der Versorgungsspannung (7) und Masse besteht,
- Generierung eines elektrischen Pulses in der Primärspule (8) innerhalb der Totzeiten jeweils derjeniger Takte, die gemäß des Übertragungsstandards dem Datenpaket (2) entsprechen,
- Gleichrichtung des in der Sekundärspule (8') induzierten Wechselspannungssignals, so dass Energie bereitgestellt wird, und
- Erfassung der in der Primärspule (8) generierten Pulse über die Sekundärspule (8') gemäß des Übertragungsstandards als das zu übertragende Datenpaket (2).

## Claims

1. A galvanically isolating interface for the transmission of electrical energy and data packets (2), comprising:
- A coil arrangement with at least one primary coil (8) and at least one secondary coil (8'), wherein the coil arrangement is configured in such a way that the primary coil (8) and the at least first secondary coil (8') are inductively coupled to one another and galvanically decoupled from one another,
- a switching unit (6) which is configured in such a way
∘ that the primary coil (8) can be connected to and disconnected from a supply voltage (7) or can be disconnected from ground so that there is no electrical connection between the supply voltage (7) and ground via the primary coil (8), and
∘ that the polarity of the supply voltage (7) at the primary coil (8) can be reversed,
- a control unit (3, 4, 5) which is configured to control the switching unit (6) in such a way
∘ that the polarity of the primary coil (8) is reversed at a defined cycle rate, which is selected as a function of a defined serial transmission standard so that a corresponding AC voltage signal is induced in the secondary coil (8'),
∘ that the primary coil (8) is disconnected from the supply voltage (7) or from ground for a defined dead time before or after each polarity reversal per cycle, and
∘ that an electrical pulse is generated in the coil arrangement on the primary side in the dead times of each cycle, which correspond to a data packet (2) from the transmission standard,
- a rectifier (11) which is configured to rectify the AC voltage signal induced in the first secondary coil (8') and to provide it as energy, and
- an evaluation unit (9, 13) which is configured to detect the pulses generated on the primary side in the coil arrangement in accordance with the transmission standard via the first secondary coil (8') as the data packet (2) to be transmitted.

2. The interface as claimed in claim 1, wherein the primary coil (8) comprises a center tap (81), and wherein the switching unit (6) comprises two switches switched by the control unit (3, 4, 5) for disconnecting the primary coil (8) from the supply voltage (7) and for its defined polarity reversal.

3. The interface as claimed in claim 2, wherein the center tap (81) is connected to the supply voltage (7), and wherein the control unit (3, 4, 5) switches the switches in such a way that the first switch switches the first end tap (82) to ground according to the cycle rate and disconnects it, and
∘ that the second switch switches the second end tap (83) to ground according to the cycle rate inversely to the first switch and disconnects it,
∘ and wherein the control unit (3, 4, 5) controls the two switches inversely in such a way that the primary coil (8) is disconnected from ground in each case for the defined dead time between the opening of the respective switch and the closing of the respective other switch.

4. The interface as claimed in one of claims 1 to 3, comprising:
- An energy storage unit (12) which can be connected to the secondary coil (8') via a third switch (10), wherein the energy storage unit (12) is fed in particular by the rectifier (11),
wherein the evaluation unit (9, 13) is configured to control the third switch (10) in such a way that electrical pulses are generated in the secondary coil (8') depending on a data packet (14) to be transmitted in the dead times of the defined cycles which correspond to the data packet (14) in accordance with the transmission standard, and
wherein the control unit (3, 4, 5) is configured to detect the pulses generated in the secondary coil (8') at the primary coil (8) in accordance with the transmission standard as the data packet (14) to be transmitted.

5. The interface as claimed in one of the preceding claims, wherein UART or USART is implemented in the control unit (3, 4, 5) and/or in the evaluation unit (9, 13) as the transmission standard for transmitting the data packet (2, 14).

6. The interface as claimed in one of the preceding claims, wherein the control unit (3, 4, 5) and/or the evaluation unit (9, 13) are/is configured to transmit the pulses with a variable energy, such as a variable amplitude or a variable pulse duration.

7. The interface as claimed in one of the preceding claims, wherein the coil arrangement comprises a second secondary coil (8").

8. A measuring system, comprising:
- A higher-level unit (40) which is configured to generate a data packet (2) and
- supply a field device (60) with energy, and
- An interface (50) as claimed in one of the preceding claims, which is connected on the primary side to the higher-level unit (40) and on the secondary side to the field device (60)
∘ in such a way that the data packet (2) can be transmitted to the field device (60) in accordance with the transmission standard,
∘ in such a way that the higher-level unit (40) supplies the field device (60) with energy via the interface (50), and
∘ in such a way that the field device (60) is galvanically isolated from the higher-level unit (40).

9. A method for transmitting energy and data packets (2) via the interface (50) as claimed in one of claims 1 to 7, comprising the following process steps:
- Polarity reversal of the primary coil (8) at a defined cycle rate, which is selected as a function of a defined serial transmission standard, [page 9, lines 5-8] so that a corresponding AC voltage signal is induced in the secondary coil (8'), wherein the primary coil (8) is disconnected from the supply voltage (7) or ground for a defined dead time in each case before or after each polarity reversal per cycle in such a way that there is no electrical connection between the supply voltage (7) and ground via the primary coil (8),
- Generation of an electrical pulse in the primary coil (8) within the dead times of each cycle that correspond to the data packet (2) in accordance with transmission standard,
- Rectification of the AC voltage signal induced in the secondary coil (8') so that energy is provided, and
- Detection of the pulses generated in the primary coil (8) via the secondary coil (8') in accordance with the transmission standard as the data packet (2) to be transmitted.

## Revendications

1. Interface à séparation galvanique destinée à la transmission d'énergie électrique et de paquets de données (2), laquelle interface comprend :
- un agencement de bobines avec au moins une bobine primaire (8) et au moins une bobine secondaire (8'), l'agencement de bobines étant conçu de telle sorte que la bobine primaire (8) et l'au moins première bobine secondaire (8') sont couplées inductivement l'une à l'autre et découplées galvaniquement l'une de l'autre,
- une unité de commutation (6), laquelle est conçue de telle sorte
∘ que la bobine primaire (8) peut être raccordée à une tension d'alimentation (7) et en être séparée ou être séparée du côté de la masse, de sorte qu'il n'existe aucune liaison électrique entre la tension d'alimentation (7) et la masse par l'intermédiaire de la bobine primaire (8), et
∘ que la tension d'alimentation (7) peut être inversée au niveau de la bobine primaire (8),
- une unité de commande (3, 4, 5), laquelle est conçue pour commander l'unité de commutation (6) de telle sorte
∘ que la bobine primaire (8) est inversée selon un taux de cycles défini, lequel taux est choisi en fonction d'une norme de transmission série définie, de sorte qu'un signal de tension alternative correspondant est induit dans la bobine secondaire (8'),
∘ que la bobine primaire (8) est séparée de la tension d'alimentation (7) ou de la masse avant ou après chaque inversion de polarité par cycle pendant respectivement un temps mort défini, et
∘ que, pendant les temps morts des cycles qui correspondent à un paquet de données (2) de la norme de transmission, une impulsion électrique est générée dans l'agencement de bobines côté primaire,
- un redresseur (11), lequel est conçu pour redresser le signal de tension alternative induit dans la première bobine secondaire (8') et le mettre à disposition sous forme d'énergie, et
- une unité d'évaluation (9, 13), laquelle est conçue pour détecter les impulsions générées côté primaire dans l'agencement de bobines conformément à la norme de transmission par l'intermédiaire de la première bobine secondaire (8') comme étant le paquet de données (2) à transmettre.

2. Interface selon la revendication 1,
pour laquelle la bobine primaire (8) comprend une prise médiane (81), et
pour laquelle l'unité de commutation (6) comprend deux interrupteurs commutés par l'unité de commande (3, 4, 5) pour séparer la bobine primaire (8) de la tension d'alimentation (7) et pour inverser la polarité de celle-ci de manière définie.

3. Interface selon la revendication 2,
pour laquelle la prise médiane (81) est reliée à la tension d'alimentation (7), et pour laquelle l'unité de commande (3, 4, 5) commute les interrupteurs de telle sorte
∘ que le premier interrupteur commute à la masse et sépare de la masse la première prise terminale (82) en fonction du taux de cycles, et
∘ que le deuxième interrupteur, en fonction du taux de cycles, inverse le premier interrupteur et met à la masse la deuxième prise terminale (83) et l'en sépare,
et pour laquelle l'unité de commande (3, 4, 5) pilote inversement les deux interrupteurs de telle sorte que la bobine primaire (8) est séparée de la masse entre l'ouverture de l'interrupteur respectif et la fermeture de l'autre interrupteur respectif pendant respectivement le temps mort défini.

4. Interface selon l'une des revendications 1 à 3, laquelle interface comprend :
- un accumulateur d'énergie (12) pouvant être relié à la bobine secondaire (8') par l'intermédiaire d'un troisième interrupteur (10), l'accumulateur d'énergie (12) étant notamment alimenté par le redresseur (11), l'unité d'évaluation (9, 13) étant conçue pour commander le troisième interrupteur (10) de telle sorte qu'en fonction d'un paquet de données (14) à transmettre, des impulsions électriques sont générées dans la bobine secondaire (8') aux temps morts de cycles définis qui correspondent au paquet de données (14) conformément à la norme de transmission, et
l'unité de commande (3, 4, 5) étant conçue pour détecter les impulsions générées dans la bobine secondaire (8') sur la bobine primaire (8) conformément à la norme de transmission comme étant le paquet de données (14) à transmettre.

5. Interface selon l'une des revendications précédentes, pour laquelle UART ou USART est mis en œuvre dans l'unité de commande (3, 4, 5) et/ou dans l'unité d'évaluation (9, 13) en tant que norme de transmission pour la transmission du paquet de données (2, 14).

6. Interface selon l'une des revendications précédentes, pour laquelle l'unité de commande (3, 4, 5) et/ou l'unité d'évaluation (9, 13) est/sont conçue(s) pour transmettre les impulsions avec une énergie variable, comme par exemple une amplitude variable ou une durée d'impulsion variable.

7. Interface selon l'une des revendications précédentes, pour laquelle l'agencement de bobines comprend une deuxième bobine secondaire (8").

8. Système de mesure, comprenant :
- une unité supérieure (40), laquelle est conçue pour générer un paquet de données (2) et
- un appareil de terrain (60), lequel est alimenté en énergie par ladite unité supérieure, et
- une interface (50) selon l'une des revendications précédentes, laquelle interface est reliée côté primaire à l'unité supérieure (40) et côté secondaire à l'appareil de terrain (60), de telle sorte
∘ que le paquet de données (2) puisse être transmis à l'appareil de terrain (60) conformément à la norme de transmission,
∘ que l'unité supérieure (40) alimente l'appareil de terrain (60) en énergie via l'interface (50), et
∘ que l'appareil de terrain (60) soit séparé galvaniquement de l'unité supérieure (40).

9. Procédé destiné à la transmission d'énergie et de paquets de données (2) via l'interface (50) selon l'une des revendications 1 à 7, lequel procédé comprend les étapes suivantes :
- Inversion de la polarité de la bobine primaire (8) à un taux de cycle défini, lequel taux est choisi en fonction d'une norme de transmission série définie [p. 9. I. 5-8], de sorte qu'un signal de tension alternative correspondant est induit dans la bobine secondaire (8'), la bobine primaire (8) étant séparée de la tension d'alimentation (7) ou de la masse pendant respectivement un temps mort défini avant ou après chaque inversion de polarité par cycle, de sorte qu'il n'existe aucune liaison électrique entre la tension d'alimentation (7) et la masse via la bobine primaire (8),
- Génération d'une impulsion électrique dans la bobine primaire (8) pendant les temps morts de chacun des cycles qui correspondent au paquet de données (2) conformément à la norme de transmission,
- Redressement du signal de tension alternative induit dans la bobine secondaire (8') de manière à fournir de l'énergie, et
- Détection des impulsions générées dans la bobine primaire (8) par l'intermédiaire de la bobine secondaire (8') conformément à la norme de transmission comme étant le paquet de données (2) à transmettre.
